# EUROPÄISCHE PATENTSCHRIFT

(11) **EP 0 348 670 B1**
(45) Veröffentlichungstag und Bekanntmachung des Hinweises auf die Patenterteilung: **19.10.1994**
(21) Anmeldenummer: 89109506.9
(22) Anmeldetag: 26.05.1989
(51) Int. Cl.: A01K 61/00

(54) **Verwendung eines mit Zellulose umwickelten, vorzugsweise kokosfaserumwickelten Dränagerohres zur Klärung des Wassers in einem Gartenteich**
Use of a drainage pipe wrapped in cellulose material, preferably coconut fibres, for purifying the water in a garden pond
Utilisation d'un tuyau de drainage enveloppé de cellulose, de préférence de fibre de noix de coco, pour clarifier l'eau dans un bassin de jardin

(30) Priorität: 30.06.1988 DE 3822158
(43) Veröffentlichungstag der Anmeldung: 03.01.1990
(73) Patentinhaber: Kruk, Wolfgang, D-37235 Hessisch Lichtenau (DE)
(72) Erfinder: Kruk, Wolfgang, D-37235 Hessisch Lichtenau (DE)
(74) Vertreter: Walther, Horst, Dipl.-Ing.

(56) Entgegenhaltungen:
- DE-A- 3 230 323
- US-A- 3 301 402
- US-A- 4 002 566

## Beschreibung

Die Erfindung betrifft die Verwendung eines mit Zellulose umwickelten, vorzugsweise kokosfaserumwickelten Dränagerohres.

Ein Dränagerohr der eingangs genannten Art ist aus der DE-PS 32 39 323 bekannt; es wird zur Entwässerung von Gebäuden eingesetzt.

Es ist darüber hinaus bekannt, das Wasser von Gartenteichen mit Filterpumpanlagen zu klären, wie dies beispielsweise aus der US-PS 40 025 66 bekannt ist. Da die zur Verfügung stehende Filterfläche in einer derartigen Filterpumpenanlage relativ gering ist, muß bei einem großen Wasserdurchsatz, der notwendig ist, um eine gleichbleibene Wassergüte sicherzustellen, das Filtermaterial relativ häufig ausgewechselt werden. Dies ist umständlich und teuer.

Der Erfindung liegt daher die Aufgabe zugrunde, ein Mittel zur Klärung des Wassers eines Teichbauwerkes bzw. eines Gartenteiches zu finden, das preiswert ist, und mit dem dennoch eine gute Reinigungswirkung erzielt werden kann. Die Aufgabe wird erfindungsgemäß durch die Verwendung eines mit Zellulose umwickelten, vorzugsweise kokosfaserumwickelten Dränagerohres als Filter zur Klärung des Wassers beim Umpumpen in einem Teichbauwerk, insbesondere in einem Gartenteich, gelöst.

Eine Filteranlage eines Teichbauwerkes zeichnet sich erfindungsgemäß weiterhin dadurch aus, daß die Filteranlage ein an sich bekanntes mit Zellulose umwickeltes Dränagerohr aufweist, wobei das eine Ende des Dränagerohres geschlossen ist, und das andere Ende an eine Pumpe, die das gesäuberte Wasser in den Teich zurückpumpt, angeschlossen ist.

Ein derartiges Dränagerohr bietet im Vergleich zu einer herkömmlichen Filterpumpanlage eine geradezu riesige Filterfläche. Ein solches Dränagerohr wird in den Gartenteich eingelegt und endseitig an eine Pumpe angeschlossen, die das gesäuberte Wasser in den Teich zurückpumpt. Wird festgestellt, das die Reinigungswirkung nachläßt, wird das alte kokosfaserumwickelte Dränagerohr durch ein neues ersetzt. Dies ist einfach, billig und bequem.

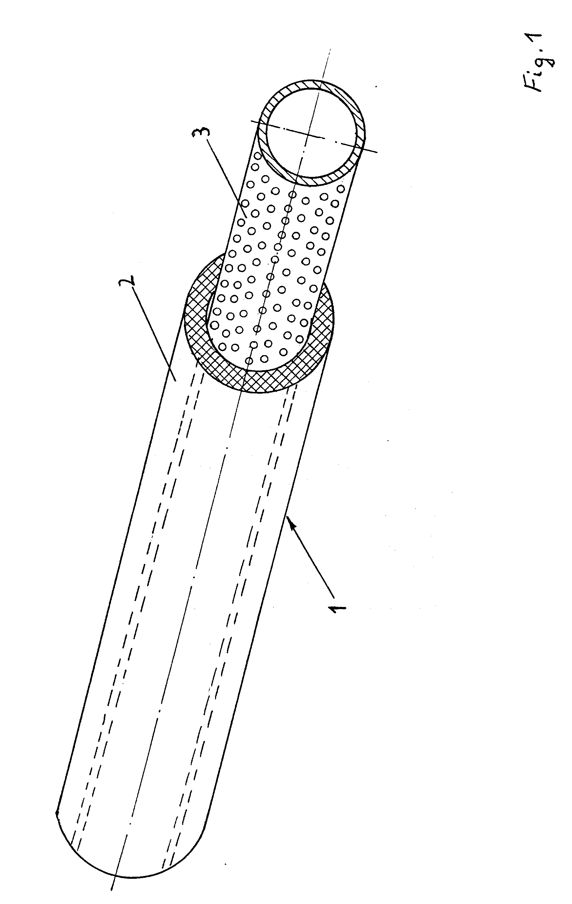

Fig. 1 zeigt ein derartiges kokosfaserumwickeltes Dränagerohr in perspektivischer Darstellung im Schnitt.

Gemäß Fig. 1 ist das Dränagerohr selbst mit 1 und die Ummantelung aus Kokosfasern mit 2 bezeichnet. Das Dränagerohr selbst weist Löcher 3 auf, durch die das Wasser durch die Ummantelung aus Kokosfasern hindurch in das Innere des Rohres gelangt, von dort von der Pumpe abgezogen und wieder in den Teich eingeleitet wird.

## Patentansprüche

1. Verwendung eines mit Zellulose umwickelten, vorzugsweise kokosfaserumwickelten Dränagerohres als Filter zur Klärung des Wassers beim Umpumpen in einem Teichbauwerk, insbesondere in einem Gartenteich.

2. Filteranlage eines Teichbauwerkes,
**dadurch gekennzeichnet,** daß
die Filteranlage ein an sich bekanntes mit Zellulose umwickeltes Dränagerohr aufweist, wobei das eine Ende des Dränagerohres geschlossen ist und das andere Ende an eine Pumpe, die das gesäuberte Wasser in den Teich zurückpumpt, angeschlossen ist.

## Claims

1. Use of a drainage pipe, which is wound with cellulose, preferably wound with coconut fibre, as a filter for the purification of water in pumping around in a pond construction, especially in a garden pond.

2. Filter installation of a pond construction, characterised thereby that the filter installation comprises a per se known drainage pipe wound with cellulose, wherein one end of the drainage pipe is closed and the other end is connected to a pump which pumps the cleaned water back into the pond.

## Revendications

1. Utilisation d'un tuyau de drainage enveloppé de cellulose, de préférence de fibre de coco, comme filtre pour clarifier l'eau pompée dans un ouvrage à pièce d'eau, notamment une pièce d'eau de jardin.

2. Installation de filtration d'un ouvrage a pièce d'eau, caractérisée en ce que l'installation de filtration comporte un tuyau de drainage connu en soi, enveloppé de cellulose, où une première extrémité du tuyau de drainage est fermée et l'autre extrémité est raccordée à une pompe qui renvoie l'eau épurée dans la pièce d'eau.
